# EUROPÄISCHE PATENTSCHRIFT

(11) **EP 2 499 620 B1**
(45) Veröffentlichungstag und Bekanntmachung des Hinweises auf die Patenterteilung: **27.07.2016**
(21) Anmeldenummer: 10782188.6
(22) Anmeldetag: 09.11.2010
(51) Int. Cl.: G07F 17/32

(54) **ELEKTRONISCHES SPIEL- UND/ODER UNTERHALTUNGSGERÄT MIT EINER LICHTEFFEKTVORRICHTUNG**
ELECTRONIC GAME AND/OR ENTERTAINMENT DEVICE WITH A LIGHT EFFECT DEVICE
APPAREIL DE JEU ET/OU DE DIVERTISSEMENT ÉLECTRONIQUE DOTÉ D'UN DISPOSITIF D'EFFETS LUMINEUX

(30) Priorität: 13.11.2009 AT 18012009
(43) Veröffentlichungstag der Anmeldung: 19.09.2012
(73) Patentinhaber: Novomatic AG, 2352 Gumpoldskirchen (AT)
(72) Erfinder: WÖLS, Martin, A-2352 Gumpoldskirchen (AT); FRIDRICH, Heinz, A-2352 Gumpoldskirchen (AT)
(74) Vertreter: Thoma, Michael
(86) Internationale Anmeldenummer: PCT/EP2010/006826
(87) Internationale Veröffentlichungsnummer: WO 2011/057762

(56) Entgegenhaltungen:
- EP-A1- 1 865 477

## Beschreibung

Die vorliegende Erfindung betrifft ein Spiel- und/oder Unterhaltungsgerät, insbesondere in Form eines münz- und/oder geldwertmäßig betätigbaren Glücksspielautomaten und/oder Wettgeräts, mit einem Gehäuse, an dem eine Lichteffektvorrichtung zur Erzeugung von Lichteffekten vorgesehen ist.

Derartige Spiel- beziehungsweise Unterhaltungsgeräte können insbesondere in Casinos und Spielhallen Verwendung finden und hierbei verschiedene Ausbildungen besitzen, beispielsweise Walzenspielautomaten bilden, bei denen in den Sichtfenstern der Anzeigefelder mehrere rotierende Walzen mit verschiedenen Spielsymbolen angeordnet sein können oder auch elektronisch auf Bildschirmen oder anderen Anzeigemitteln rotierend dargestellt werden können, wobei ein Spielgewinn ausgegeben wird, wenn die Walzen mit gleichen Spielsymbolen entlang einer Gewinnlinie stehen bleiben. Andere Ausbildungsformen solcher Spiel- beziehungsweise Unterhaltungsgeräte können Pokerspielautomaten, aber auch Wettautomaten sein, mittels derer auf Ereignisse wie Sportveranstaltungen Wetten platziert werden können.

Die Geräte sind hierbei regelmäßig als Standgeräte ausgebildet, bei denen an einer Frontseite im oberen Abschnitt des Gehäuses eine oder auch mehrere Anzeigevorrichtungen übereinander vorgesehen sind, so dass sie von einem Bedienerplatz vor dem Gehäuse betrachtet beziehungsweise verfolgt werden können. Unterhalb der zumindest einen Anzeigevorrichtung beispielsweise in Form eines Bildschirms ist etwa auf Bauchhöhe des vor dem Gerät stehenden Spielers ein Bedienpaneel mit mehreren Bedientasten vorgesehen, die von Hand betätigbar sind und unter anderem dazu dienen, bei einem Walzenspielgerät die rotierenden Walzen in Betrieb zu setzen beziehungsweise anzuhalten. Im Inneren des Gehäuses können diverse Funktionsbausteine des Geräts wie beispielsweise die Spielsteuervorrichtung, ein Geldprüfgerät und/oder eine Geldsammelvorrichtung untergebracht sein.

Derartige Spiel- und Unterhaltungsgeräte werden in einem Casino beziehungsweise in einer Spielhalle regelmäßig in größeren Gruppen aufgestellt, wobei die Geräte entlang einer Reihe nebeneinander oder auch sternförmig um eine Säule herum angeordnet werden können. Um ein jeweiliges Spielgerät erfolgreich in dem Sinne zu machen, dass es von vielen Spielern ausgewählt wird, wird daher regelmäßig versucht, das Spielgerät aus der Masse der benachbarten Spielgeräte durch Lichteffekte und dergleichen hervorzuheben, um die Aufmerksamkeit möglichst vieler Spieler auf sich zu lenken.

Hierbei ist es bekannt, verschiedene Lichteffekte in verschiedener Art und Weise zu erzeugen. Beispielsweise werden regelmäßig verschiedenfarbige Lichtquellen wie beispielsweise LEDs an der Frontseite des Gehäuses platziert, um verschiedenfarbige Lichtbündel in den Raum vor dem Spielgerät abzustrahlen, in dem ein Bediener steht beziehungsweise ein potentieller Bediener vorbeiläuft. Andererseits sind auch auf der Oberseite der Geräte positionierte Blinkleuchten nach Art von Leuchtturmlichtern bekannt, die periodisch einen umlaufenden Lichtstrahl in den Raum werfen.

In der US 7,048,631 B2 ist ein Spielgerät der eingangs genannten Art gezeigt, bei dem an einer Gerätevorderseite zum Anzeigen von Spielinformationen ein Lichtdisplay vorgesehen ist, das eine Licht brechende, transparente Scheibe verwendet, in die von verschiedenen Richtungen her verschiedenfarbiges Licht eingespeist werden kann, das dann durch die transparente Scheiben hindurchtritt und an einer vorbestimmten Austrittsstelle gebrochen austritt. Durch die Lichtbrechung sollen vielerlei Spielinformationen in Form von Lichtsignalen erzeugbar sein. Die erzielte Steigerung der Attraktivität des Spielgeräts ist jedoch begrenzt, da die Lichtsignale beziehungsweise Lichteffekte erst dann richtig sichtbar sind, wenn der Spieler bereits am Spielgerät steht und dieses bespielt. Die Lichtsignale sind zudem eher von geringer Reichweite und begrenzter Leuchtkraft, so dass sie von nur vorbeilaufenden Spielern nur begrenzt wahrnehmbar sind.

Die WO 2007/032784 beschreibt ein Spielgerät mit einem hinterleuchteten Display, dessen Helligkeit variabel gesteuert wird. Hierbei wird mittels Lichtsensoren die Umgebungshelligkeit gemessen, um in Abhängigkeit des Lichtmilieus der Umgebung das hinterleuchtete Display heller oder dunkler zu stellen.
Die EP 1 865 477 A1 sieht dem Gerätebedienplatz zugewandte Reflektoren vor, in deren Zentrum LEDs sitzen, um Licht zum Bedienplatz zu werfen.

Der vorliegenden Erfindung liegt die Aufgabe zugrunde, ein verbessertes Spiel- und/oder Unterhaltungsgerät der eingangs genannten Art zu schaffen, das Nachteile des Standes der Technik vermeidet und Letzteren in vorteilhafter Weise weiterbildet. Insbesondere soll die Attraktivität des Spielgeräts durch verbesserte Lichteffekte erhöht werden.

Erfindungsgemäß wird diese Aufgabe durch ein Spiel- und/oder Unterhaltungsgerät gemäß Anspruch 1 gelöst. Bevorzugte Ausgestaltungen der Erfindung sind Gegenstand der abhängigen Ansprüche.

Es wird also vorgeschlagen, an der Außenseite des Gerätegehäuses zumindest einen Reflektor anzubringen, mittels dessen von der Umgebung des Spielgeräts her kommendes Licht eingefangen und gezielt in Form eines Lichtstrahlbündels in den Raum, der als Einzugsbereich für das Spielgerät betrachtet werden kann, geworfen wird. Durch die Umlenkung der die Lichteffekte bewirkenden Lichtstrahlbündel können auch bei begrenzter Vorderfläche des Spielgeräts vielerlei Lichteffekte erzeugt und nicht frontseitig angeordnete Lichtquellen genutzt werden. Erfindungsgemäß umfasst die Lichteffektvorrichtung des Spiel- beziehungsweise Unterhaltungsgeräts zumindest einen an einer Außenseite des Gehäuses angeordneten Reflektor zum Abstrahlen eines Lichtstrahlbündels, der von einer außerhalb des Gehäuses angeordneten Lichtquelle anstrahlbar ist. Eine solche externe Lichteffekterzeugung durch externe Lichterzeugung und Umlenkung des extern erzeugten Lichtes durch einen Reflektor an der Gehäuseaußenseite ist insbesondere bei modernen Spielgeräten von Vorteil, die sehr große Bildschirme besitzen, die im Wesentlichen die gesamte im Blickfeld des Spielers liegende Vorderfront des Gehäuses einnehmen, so dass an sich an der Vorderfront selbst nicht mehr viel Platz für eine Vielzahl ausreichend lichtstarker Lichtquellen ist. Durch die Verwendung des Reflektors wird ein hoher Freiheitsgrad bezüglich der Anordnung der Lichtquelle erzielt, die vorteilhafterweise nicht mehr an der Frontseite des Gehäuses platziert sein muss, sondern in an sich nicht im Blickfeld liegenden Bereiche um das Spielgerät herum verschoben werden kann.

Dabei ist vorgesehen, dass der
zumindest eine Reflektor an der Gehäuseaußenseite von einer Lichtquelle bestrahlt wird, welche Lichtquelle gar nicht mehr am Spielgerät selbst, sondern vom Spielgerät separat positioniert ist. Für die Positionierung der Lichtquelle können grundsätzlich verschiedene, in der Nachbarschaft des Geräts befindliche Trägerflächen wie beispielsweise Raumwände oder Möbelstücke genutzt werden.
Dabei wird der zumindest eine Reflektor an der Gehäuseaußenseite von einem benachbarten Spielgerät her beleuchtet beziehungsweise bestrahlt, d.h. die Lichtquelle zur Bestrahlung des Reflektors ist an einem benachbarten Spielgerät angeordnet, welches neben dem Spielgerät mit dem Reflektor steht. Erfindungsgemäß ist der Reflektor mit seinem offenen Einfangquerschnitt einem seitlich neben
dem Gehäuse des Spiel- beziehungsweise Unterhaltungsgeräts liegenden Geräteaufstellplatz zugewandt, in dem ein weiteres, benachbartes Spiel- beziehungsweise Unterhaltungsgerät aufstellbar ist, und zwar derart, dass der Reflektor
Licht von einer an dem benachbarten Gerät angeordneten Lichtquelle einfängt und in ein Sichtfeld eines vor dem den Reflektor aufweisenden Spiel- beziehungsweise Unterhaltungsgeräts stehenden beziehungsweise vorbeilaufenden Spielers wirft.

Zusätzlich kann an dem genannten Spiel- beziehungsweise Unterhaltungsgerät, das den Reflektor aufweist, eine Lichtquelle angeordnet sein, die nicht beziehungsweise weniger der Bestrahlung des "eigenen" Reflektors dient, sondern dazu vorgesehen ist, einen an einem benachbarten Spiel- beziehungsweise Unterhaltungsgerät vorgesehenen Reflektor zu bestrahlen, um an dem benachbarten Spiel- beziehungsweise Unterhaltungsgerät einen entsprechenden Lichteffekt zu erzeugen. Vorteilhafterweise bestrahlen sich nebeneinander angeordnete Geräte wechselseitig, d.h. die Lichtquelle an dem einen Gerät bestrahlt jeweils den Reflektor am anderen Gerät. Hierdurch ist es nicht notwendig, einen jeweilige Lichtquelle im Zentrum des Reflektors zu positionieren. Die Reflektorfläche kann frei von Lichtquellen ausgebildet sein.

Nach einer vorteilhaften Weiterbildung der Erfindung kann die Lichtquelle, die ein benachbartes Gerät beziehungsweise den daran vorgesehenen Reflektor bestrahlen soll, in unmittelbarer Nähe des Reflektors am "eigenen" Gerät positioniert sein, wobei der neben der Lichtquelle liegende Reflektor jedoch an einem beschatteten Abschnitt liegen kann, so dass Licht aus der unmittelbar benachbart angeordneten Lichtquelle nicht in den Reflektor des eigenen Geräts fällt. Entsprechende Beschattungsmittel können beispielsweise von einem Abschnitt des Gehäuses beziehungsweise einer Gehäusekante gebildet sein oder durch ein separat befestigtes Element.

Zusätzlich zu der Bestrahlung des Reflektors von einem benachbarten Spielgerät her kann jedoch auch an dem jeweiligen Spielgerät selbst eine Lichtquelle angeordnet sein, die den Reflektor der Lichteffektvorrichtung bestrahlt. Hierdurch wird eine sozusagen autarke Lichteffekterzeugung gewährleistet, die nicht vom Aufstellen weiterer Spiel- beziehungsweise Unterhaltungsgeräte und deren exakter Ausrichtung zueinander abhängt.

Vorteilhafterweise kann durch die Umlenkung des von der Lichtquelle abgegebenen Lichts durch den genannten Reflektor die Lichtquelle in einem "verdeckten" Raumabschnitt, d.h. insbesondere an einer Gehäuseseite, die nicht im Blickfeld eines vor der Vorderseite des Geräts stehenden Spielers liegt, angeordnet werden. Hierdurch kann einerseits der verfügbare Bauraum bestmöglich ausgenutzt werden. Andererseits kann eine solche Anordnung eine Reduzierung der Blendungswirkung der Lichtquelle erreichen, da ein Spieler nicht mehr direkt in die Lichtquelle schaut, aber dennoch das umgelenkte Sekundärlicht als Lichteffekt wahrnehmen kann.

Der zumindest eine Reflektor der Lichteffektvorrichtung kann grundsätzlich verschieden ausgebildet sein und verschiedene Formen besitzen. Um eine lichtstarke und gezielte Bündelung des abgestrahlten Lichtsignals im gewünschten Raumabschnitt zu erreichen, ist der Reflektor gemäß der Erfindung konkav ausgebildet. Hierbei ist eine napfförmige, rotationssymmetrische, im Querschnitt beispielsweise parabelförmige Ausbildung der Reflektorfläche möglich. Um eine breitere, bandförmige Lichtbündelabstrahlung zu erzielen, die einen größeren Bereich ausleuchtet, ist in vorteilhafter Weise der Erfindung eine Reflektorfläche in Form einer länglichen, konkaven Reflektorrinne vorgesehen, die eine Hohlkehle bilden kann.

Der Reflektor kann hierbei prinzipiell ein eigenständiges, vom Gehäuse separates Bauteil bilden, das am Gehäuse befestigt ist. Um eine glatte Außenkontur des Spielgeräts zu erhalten, ist in bevorzugter Weiterbildung der Erfindung jedoch vorgesehen, dass der Reflektor in einen Wandungsabschnitt des Gehäuses integriert ist beziehungsweise ein Wandungsabschnitt des Gehäuses als Reflektorfläche ausgebildet ist.

Insbesondere kann der zumindest eine Reflektor von einer in die Gehäuseoberfläche eingearbeiteten Hohlkehle gebildet sein, deren Oberfläche reflektierend, insbesondere verspiegelt, ausgebildet ist. Je nach Beschaffenheit der Gehäusewandung kann die reflektierende Oberflächenausbildung in verschiedener Weise erzielt werden. Ist beispielsweise der entsprechende Wandungsabschnitt des Gehäuses aus Metall gefertigt, kann der Reflektor von einer ausreichend glatt polierten Metalloberfläche gebildet sein. Ist ein Holz- oder Kunststoffgehäuse vorgesehen, kann eine reflektierende Oberflächenbeschichtung auf den entsprechenden Wandungsabschnitt des Gehäuses aufgebracht sein, beispielsweise in Form einer spiegelnden beziehungsweise reflektierenden Folie oder einer aufgespritzten, aufgesprühten oder durch Sputtern aufgebrachten Oberflächenschicht.

Die Reflektorfläche kann hierbei in Abhängigkeit des gewünschten Lichteffekts prinzipiell verschieden konturiert beziehungsweise geformt sein. In vorteilhafter Weiterbildung der Erfindung kann die Reflektorfläche eine kontinuierlich, stetig gekrümmte, glatte Konkavfläche bilden. Alternativ kann die Reflektorfläche einen Oberflächenstruktur mit Bereichsübergängen zwischen verschiedenen Abschnitten aufweisen, wobei beispielsweise eine Schuppenstruktur in die Reflektoroberfläche eingearbeitet sein kann.

Der Reflektor kann grundsätzlich an verschiedenen Abschnitten des Gehäuses angeordnet sein. Um wenig frontseitige Fläche zu verbrauchen und - bei gegebener Breite der Anzeigevorrichtung und Bedienvorrichtung - ein schmales Gehäuse bauen zu können, gleichzeitig jedoch auch einen hohen Freiheitsgrad bezüglich der Anordnung der Lichtquelle zu erhalten, ist in vorteilhafter Weiterbildung der Erfindung vorgesehen, dass der zumindest eine Reflektor an einer Kante des Gehäuses zwischen zwei Gehäusepaneelen beziehungsweise Gehäuseabschnitten vorgesehen ist.

Insbesondere kann der zumindest eine Reflektor an einem seitlichen Randabschnitt des Gehäuses angeordnet sein und eine Winkelausrichtung besitzen, so dass er Licht von der Seite des Gehäuses her kommend einfangen und zur Frontseite des Geräts in eine Richtung vor das Gerät und/oder über das Gerät abstrahlen kann.

Nach einer vorteilhaften Weiterbildung der Erfindung kann hierbei der zumindest eine Reflektor in die Tiefe gehend angeordnet sein beziehungsweise sich mit seiner Längsachse in einem spitzen Winkel zur Gehäusetiefe erstrecken, vorzugsweise etwa parallel zu einer vertikalen Längsmittelebene des Spiel- beziehungsweise Unterhaltungsgeräts schräg von einer Gerätevorderseite her nach hinten zu einer Geräterückseite hin ansteigend. Eine solche rampenförmig geneigte, in die Tiefe gehende Ausrichtung des Reflektors ermöglicht es einerseits, den Reflektor quer von einer Seite rechts oder links des Geräts her zu bestrahlen, gleichzeitig jedoch das den Lichteffekt bewirkende Lichtstrahlbündel in den Einzugsbereich des Geräts, d.h. das Sichtfeld eines vor dem Gerät stehenden beziehungsweise daran vorbeilaufenden Spielers abzustrahlen, wobei vorteilhafterweise ein zu einem vor dem Gerät stehenden Spieler ansteigender Lichtbalken erzeugt wird, der jederzeit wahrnehmbar ist.

Insbesondere kann der Reflektor an den seitlichen Gehäusekanten vorgesehen sein, die ein Bedienpaneel des Spielgeräts und/oder eine oberhalb des Bedienpaneels angeordnete Anzeigevorrichtung trägt beziehungsweise einfasst, wobei der genannte Gehäuseabschnitt (beziehungsweise die diesen einfassenden seitlichen Gehäusekanten) zur Gerätevorderseite (beziehungsweise zu einem davor stehenden Spieler) hin zur Horizontalen spitzwinklig geneigt abfällt.

Alternativ oder zusätzlich kann ein Reflektor auch an einer seitlichen Gehäusekante eines oberen Gehäuseabschnitts vorgesehen sein, der eine vorzugsweise etwa auf Kopfhöhe befindliche Anzeigevorrichtung einfasst beziehungsweise trägt und sich in einer aufrechten, insbesondere vertikalen Ausrichtung erstreckt.

Alternativ oder zusätzlich kann zumindest ein Reflektor auch an einem liegenden Kantenabschnitt des Gehäuses vorgesehen sein, vorteilhafterweise an einem geknickten beziehungsweise gekrümmten Übergangsabschnitt des Gehäuses zwischen einer unteren und einer oberen Anzeigevorrichtung. Alternativ oder zusätzlich kann auch an einem liegenden Kantenabschnitt an einer Oberseite des Gehäuses ein entsprechender Reflektor vorgesehen sein, der von einer Lichtquelle oberhalb des genannten Kantenabschnitts beleuchtet werden kann, beispielsweise von einer Lichtquelle, die an einem auf die Oberseite aufsetzbaren Aufsetzteil angeordnet ist. Alternativ oder zusätzlich kann auch an dem besagten Aufsatzteil an einem unteren Kantenabschnitt hiervon ein Reflektor angeordnet sein, der von einer Lichtquelle an der Oberseite des Gerätegehäuses bestrahlt wird.

Um bei einem schmal bauenden Gehäuse möglichst große Reflektorflächen zu erzielen, ist in vorteilhafter Weise zumindest ein Reflektor an der Gehäuseaußenseite vorgesehen, dessen Reflektorfläche eine Länge besitzt, die mindestens drei Mal, vorzugsweise mindestens fünf Mal und ggf. auch mehr als zehn Mal der Breite der Reflektorfläche entspricht. Vorteilhafterweise ist also eine längliche, schmale Reflektorfläche vorgesehen.

Die Stärke der Konkavität der Reflektorfläche kann grundsätzlich verschieden ausgebildet und an die Beabstandung der beabsichtigten Aufstellungsverhältnisse für die Geräte angepasst sein. In vorteilhafter Weiterbildung der Erfindung kann bei Ausbildung der Reflektorfläche in Form einer Hohlkehle die Tiefe der Konkavität weniger als ein Viertel der Breite der Hohlkehle betragen. Vorteilhafterweise ist die Krümmung der Reflektorfläche gleichmäßig, d.h. im Querschnitt kreisbogenförmig. Um ein an den Grenzen definiertes und gezielt wahrnehmbares Lichstrahlbündel zu erzielen, ist die Reflektorfläche randseitig linienförmig vorzugsweise durch eine abgewinkelte Kante begrenzt, die den Übergang der in die Gehäusewandung eingearbeiteten Hohlkehle zu den angrenzenden Wandungsabschnitten bildet.

Die vorliegende Erfindung wird nachfolgend anhand eines bevorzugten Ausführungsbeispiels und zugehöriger Zeichnungen näher erläutert. In den Zeichnungen zeigen:
Fig. 1: eine Frontansicht eines Spielgerätes nach einer vorteilhaften Ausführung der Erfindung, das ein Gehäuse umfasst, in das frontseitig zwei Bildschirme sowie ein Bedienpaneel eingesetzt sind, wobei an randseitigen Kantenabschnitten des Gehäuses Reflektoren bildenden Hohlkehlen vorgesehen sind,
Fig. 2: eine Draufsicht auf das Spielgerät aus Fig. 1,
Fig. 3: eine Seitenansicht des Spielgeräts aus Fig. 1,
Fig. 4: eine Schnittansicht entlang der Linie A-A durch die seitliche Gehäusekante des Spielgeräts aus Fig. 3,
Fig. 5: eine schematische, perspektivische Darstellung der den Reflektor bildenden Hohlkehle im Bereich der seitlichen Gehäusekante des Spielgeräts aus Fig. 3, die die Krümmung der länglichen Reflektorrinne verdeutlicht,
Fig. 6: eine schematische, perspektivische Darstellung der hohlkehlenförmigen Reflektorfläche mit der neben der Hohlkehle angeordneten, stabartigen Lichtquelle zur Beleuchtung eines an einem Nachbargerät vorgesehenen Reflektors,
Fig. 7: eine perspektivische Ansicht des unteren Halbmoduls des Spielgeräts aus Fig. 1 bis 3, die die seitlich angeordnete, einen Reflektor bildende Hohlkehle und deren Ausrichtung zeigt, wobei die vergrößerte Teilansicht F die genannte Hohlkehle zeigt, und
Fig. 8: eine Gruppe von nebeneinander angeordneten Spielgeräten, die jeweils dem Spielgerät nach Fig. 1 entsprechen, wobei die neben den die Reflektoren bildenden Hohlkehlen angeordneten Lichtquellen die jeweils benachbarten Spielgeräte bestrahlen.
Fig. 9: eine Gruppe von Spielgeräten, sternförmig um ein Gruppenzentrum herum angeordnet.

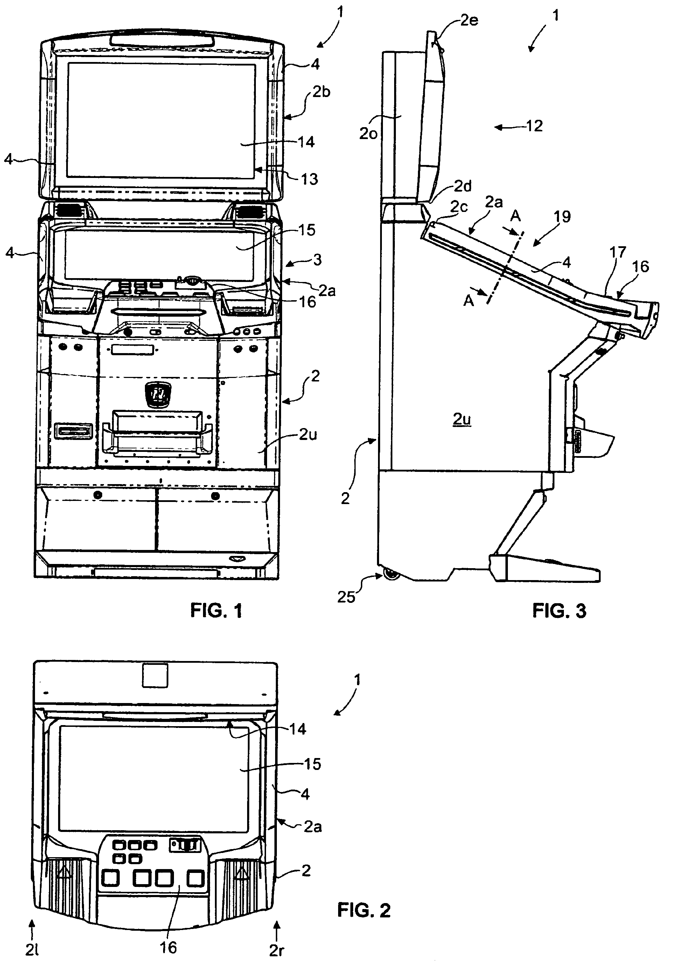

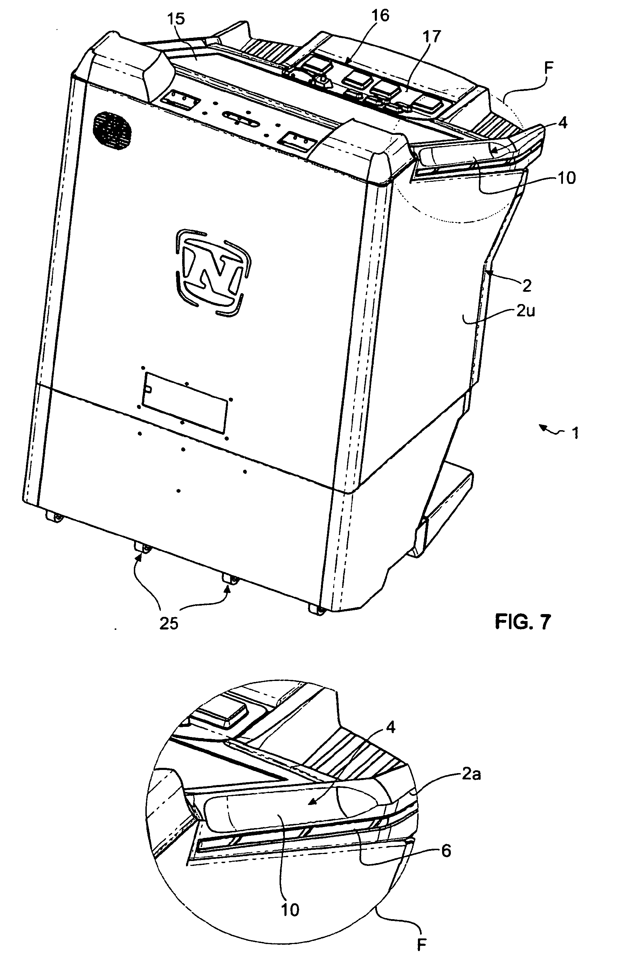

Das in den Figuren 1 bis 3 gezeigte Spielgerät bildet ein Standgerät in Form eines Stand-alone-Gerätes und umfasst ein etwa mannshohes, grob gesprochen kastenförmiges Gehäuse 2, dessen obere Hälfte der Aufnahme einer Anzeigevorrichtung 13 dient, die in der gezeichneten Ausführung aus zwei großflächigen, übereinander angeordneten Bildschirmen 14 und 15 besteht. Wie Fig. 1 zeigt, sind die beiden Bildschirme 14 und 15 zueinander stumpfwinklig geneigt angeordnet, wobei der obere Bildschirm 14 sich im Wesentlichen vertikal erstreckt, während der untere Bildschirm 15 zum Spieler hin abfallend geneigt angeordnet ist. Das Gehäuse 2 kann hierbei in mehrere Module unterteilt sein, so dass beispielsweise ein oberes Gehäusemodul 2o, an dem der obere Bildschirm 14 angeordnet ist, von dem unteren Gehäusemodul 2u, an dem der genannte untere Bildschirm 15 angeordnet ist, abgenommen werden kann beziehungsweise darauf aufgesetzt werden kann, wie ein Vergleich der Figuren 1 bis 3 einerseits und Fig. 7 andererseits zeigt.

Unterhalb der Bildschirme 14 und 15 besitzt das Gehäuse 2 des Spielgeräts 1 einen zum Spieler hin vorspringenden Bedienfeldabschnitt, der sich über die gesamte Breite des Gerätegehäuses 1 erstreckt und im Wesentlichen kastenförmig ausgebildet ist. In der gezeichneten Ausführung schließt der genannte Bedienfeldabschnitt 16 kontinuierlich in etwa in dieselbe Richtung geneigt an den Gehäuseabschnitt an, der den unteren Bildschirm 15 aufnimmt.

Die Oberseite des Bedienfeldabschnitts 16 beherbergt das Bedienfeld 17, das mehrere von Hand zu betätigende Bedientasten beispielsweise in Form von Druckschaltern umfasst. Hierbei können mechanische Schalter oder Bedienfelder eines Touchscreens oder auch andere Bedienelemente vorgesehen sein.

Weiters weist das Gehäuse 2 an einer hinteren, unteren Längskante angeordnete Rollen 25 auf, mit deren Hilfe das Spielgerät leicht, am Boden rollend, verschoben beziehungsweise bewegt werden kann. Dabei ist die spezielle Auskragung und Position des Bedienfeldes 17 in Relation zu den Rollen 25 besonderst hilfreich, um das Spielgerät an der Vorderseite besonders leicht fassen und anheben zu können und so schubkarrenmäßig bewegen zu können.

Die auf den Bildschirmen 14 und 15 anzeigbaren Spiele werden von einer (im Inneren des Gehäuses angeordneten) elektronischen Steuereinrichtung vorzugsweise in Form eines Rechners gesteuert, die im Inneren des Gehäuses 2 in dessen unterem Abschnitt aufgenommen ist. Die genannte Steuereinrichtung steuert hierbei einerseits die Anzeigevorrichtung 13 und kommuniziert andererseits mit den Bedientasten des Bedienfelds 17, wobei auch weitere Funktionskomponenten wie eine Gewinnausgabeeinrichtung, eine Geldeingabe- und Prüfvorrichtung von der Steuereinrichtung her angesteuert werden können.

Zusätzlich zu der genannten Anzeigevorrichtung 13 umfasst das Spielgerät 1 eine Lichteffektvorrichtung 3, mit Hilfe derer Lichtstrahlenbündel in den Raum vor und/oder oberhalb der Frontseite 19 des Gehäuses 2 geworfen werden können. In der gezeichneten Ausführung umfasst die genannte Lichteffektvorrichtung 3 mehrere Reflektoren 4, die jeweils an der Außenseite des Gehäuses 2 angeordnet sind.

Wie Fig. 1 zeigt, sind hierbei in der gezeichneten Ausführungsform einerseits an dem unteren Gehäuseabschnitt 2u Reflektoren 4 im Bereich des Bildschirms 15 und/oder des Bedienfelds 17 vorgesehen, wobei sich die genannten Reflektoren 4 vorteilhafterweise an den seitlichen Kanten des Gehäuses 2 erstrecken, die den genannten Bildschirm 15 und/oder das Bedienfeld 17 flankieren und den Übergangsbereich zwischen den Seitenwänden des Gehäuses 2 und der zum Spieler hin abfallenden Oberseite des unteren Gehäuseabschnitts 2u bilden.

In der gezeichneten Ausführung sind weiterhin an den seitlichen Kanten des oberen Gehäuseabschnittes 2o weitere Reflektoren 4 angebracht, die rechts und links den oberen Bildschirm 14 flankieren und in dem Übergangsbereich zwischen den Seitenflanken und der Vorderseite des oberen Gehäuseabschnittes 2o angeordnet sind.

Ohne dass dies eigens gezeichnet wäre, können weiteren Reflektoren 4 vorgesehen sein, die vorteilhafterweise liegend (horizontal) ausgerichtet sind und/oder sich quer über einen frontseitig angeordneten Gehäuseabschnitt erstrecken können. Insbesondere kann ein entsprechender Reflektor 4 an einem oberen Randabschnitt 2c des unteren Gehäuseteils 2u vorgesehen sein, der zwischen den beiden Bildschirmen 14 und 15 vorgesehen ist. Alternativ oder zusätzlich kann ein solcher liegend ausgerichteter Reflektor 4 auch an der unteren Kante beziehungsweise dem unteren Randabschnitt 2d des oberen Gehäuseteils 2o vorgesehen sein, der den oberen Bildschirm 14 unten einfasst. Wiederum alternativ oder zusätzlich kann ein Reflektor 4 auch an einem oberen Randabschnitt 2e des oberen Gehäuseteiles 2o vorgesehen sein, der den genannten oberen Bildschirm 14 oben einfasst. Wiederum alternativ oder zusätzlich kann das Spielgerät 1 ein in der Figur 1 nicht eigens gezeigtes Aufsatzteil besitzen, welches Aufsatzteil auf die Oberseite des genannten oberen Gehäuseteils 2o aufsetzbar ist, wobei ein solches Aufsatzteil beispielsweise eine Lautsprechereinheit, eine Blinklichteinheit oder dergleichen umfassen kann. Ist ein solches Aufsatzteil vorgesehen, kann dieses einen Reflektor 4 umfassen, der sich an einer unteren Kante beziehungsweise einem unteren Randabschnitt des Aufsatzteiles erstreckt, der dem genannten oberen Randabschnitt 2e des oberen Gehäuseteils 2o zugewandt ist.

Vorteilhafterweise erstrecken sich die Reflektoren 4 also im Bereich von einen Gehäuseabschnitt begrenzenden Kanten zwischen zwei zueinander abgewinkelten Gehäusepaneelen beziehungsweise -abschnitten, so dass der Reflektor 4 jeweils zu verschiedenen Seiten des Gehäuses gewandt ist, so dass der jeweilige Reflektor 4 einerseits von einer Seite her kommendes Licht einfangen und andererseits zu einer anderen Seite hin in Form eines Strahlenbündels abstrahlen kann.

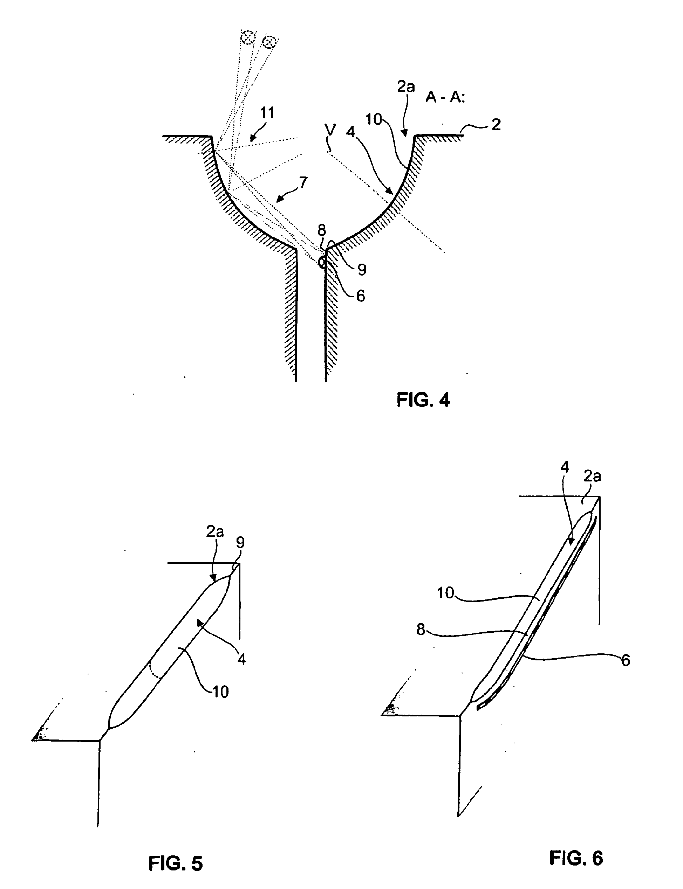

Wie die Figuren 5 bis 7 verdeutlichen, sind die Reflektoren 4 in der gezeichneten Ausführung jeweils in Form von konkaven Senken in der Gehäusewandung ausgebildet, wobei vorteilhafterweise längliche Hohlrinnen beziehungsweise Hohlkehlen in den Kantenabschnitten des jeweiligen Gehäuseteils ausgebildet sind. Wie die Figuren 5 und 6 zeigen, können die länglichen Hohlkehlen 10 mit ihrer Längsachse parallel zu den Kantenkonturen verlaufen, wobei die Längserstreckung in der gezeichneten Ausführung mehr als das Fünffache, vorzugsweise mehr als das Zehnfache der Breite der jeweiligen Hohlkehle betragen kann. Wie Fig. 5 zeigt, können die Hohlkehlen 10 im Querschnitt kreisbogenförmig gekrümmt sein, wobei die Tiefe der Konkavität deutlich kleiner als die Breite der Hohlkehle 10 sein kann.

Wie die Figuren 1 und 3 zeigen, erstrecken sich die an den Randabschnitten der schrägen, geneigten Oberseite des unteren Gehäuseteils 2u angeordneten Reflektoren 4 beziehungsweise Hohlkehlen 10 in die Gerätetiefe gehend beziehungsweise unter einem spitzen Winkel geneigt zu der Gerätetiefe 12. Vorteilhafterweise entspricht die Neigung der Reflektoren 4 bildenden Hohlkehlen 10 hierbei der Neigung der Oberseite des unteren Gehäuseteiles 2u, wobei die genannten Hohlkehlen 10 sich mit ihrer Längserstreckung parallel zu den Seitenflanken 2r und 21 des Gehäuses 2 und auch parallel zu der genannten Oberseite des unteren Gehäuseteiles 2u erstrecken.

In der gezeichneten Ausführung erstrecken sich die Hohlkehlen 10 hierbei in beide an die jeweilige Gehäusekante angrenzenden Gehäuseflächen hinein. Wie Fig. 4 zeigt, ist eine zentrale Vertikale V auf die Hohlkehlenoberfläche beziehungsweise die Symmetrieebene der gekrümmten Hohlkehlenoberfläche etwa - grob gesprochen - zusammenfallend mit einer Winkelhalbierenden des von den beiden angrenzenden Gehäuse-Wandungsflächen begrenzten Winkels, vgl. Fig. 4. Die Reflektoren 4, die von den Hohlkehlen 10 gebildet werden, schauen sozusagen sowohl zu einer jeweiligen Seite rechts oder links neben dem Spielgerät 1 als auch zu einer Frontseite des Spielgeräts 1.

Entsprechend ausgebildet und angeordnet können die weiteren Reflektoren 4 sein, die an anderen Gehäusestellen und deren Kantenabschnitten angeordnet sein können, wobei beispielsweise die an den Seitenkanten des oberen Gehäuseteiles 2o vorgesehenen Reflektoren 4 sich im Wesentlichen in vertikaler Richtung erstrecken können, und zwar derart, dass sie sowohl dem Raum seitlich rechts beziehungsweise links des Spielgeräts 1 als auch dem Raum vor der Frontseite des Spielgeräts 1 zugewandt sind.

Wie die Figuren 4 und 6 zeigen, sind jeweils unmittelbar angrenzend an die Reflektoren 4 an der Außenseite des Gehäuses 2 Lichtquellen 6 angeordnet, die in der gezeichneten Ausführungsform in Form einer Leuchtleiste ausgebildet sind. Alternativ kann auch eine LED-Kette beziehungsweise eine Reihe von nebeneinander angeordneten LEDs oder anderer punktförmiger Lichtquellen vorgesehen sein. Vorteilhafterweise folgt die Lichtquelle 6 mit ihrer Längserstreckung einer der Randkonturen der jeweiligen Hohlkehle 10, an der die jeweilige Lichtquelle 6 angeordnet ist.

Wie Fig. 4 zu erkennen gibt, sind die Lichtquellen 6 hierbei jedoch nicht dazu vorgesehen, in die angrenzende Hohlkehle 10 des "eigenen" Spielgeräts 1 zu strahlen. Vielmehr beleuchten die Lichtquellen 6 die Reflektoren 4 eines jeweils benachbarten Spielgeräts 1.

Wie Fig. 4 zeigt, sind die Lichtquellen 6 auf der Gehäuseaußenseite an beziehungsweise in einem Wandungsabschnitt des Gehäuses 2 angeordnet, der an die jeweilige Hohlkehle 10 angrenzt, wobei die zwischen der Hohlkehle 10 und dem genannten angrenzenden Wandungsabschnitt vorgesehene Wandungskante sozusagen die eigene Hohlkehle 10 beschattet, d.h. die angrenzend angeordnete Lichtquelle 6 strahlt ihr Licht nur von der zugehörigen Hohlkehle 10 weg beziehungsweise an dieser vorbei, so dass das Licht nur von der Hohlkehle am benachbarten Gerät reflektiert wird, vgl. Fig. 4.

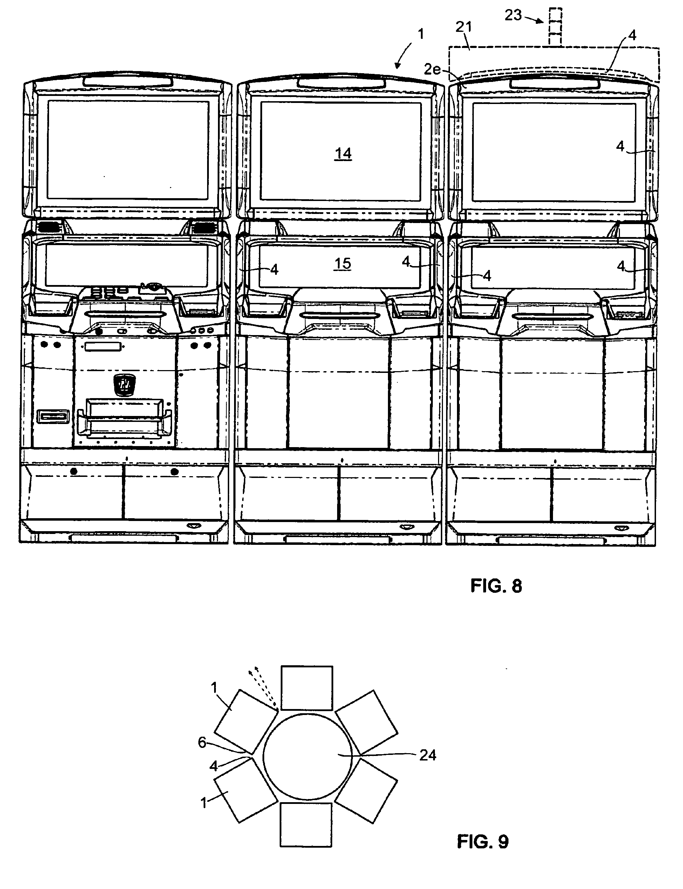

Werden die Spielgeräte nebeneinander durch einen Spalt voneinander getrennt aufgestellt und in einer Reihe angeordnet, wie dies Fig. 8 zeigt, kommen die an verschiedenen Geräten vorgesehenen Reflektoren 4 nebeneinander zu liegen, wie dies Fig. 4 schematisch im Querschnitt zeigt, so dass die jeweils an einem Gerät angeordneten Lichtquellen 6 die Reflektoren 4 des jeweils benachbarten Spielgeräts 1 ausleuchten können. Weiters zeigt die Fig. 8 ein Spielgerät, welches ein Aufsatzteil 21 aufgesetzt auf die Oberseite des genannten oberen Gehäuseteils 2o aufweist, wobei das Aufsatzteil 21 beispielsweise eine zusätzliche Lautsprechereinheit und/oder eine Blinklichteinheit oder Beleuchtungsmittel umfassen kann, sowie eine Signaleinrichtung 23 zum Signalisieren eines Gerätefehlers und/oder besonderen Spielzustandes. Das Aufsatzteil 21 umfasst einen Reflektor 4, der sich an einer unteren Kante beziehungsweise einem unteren Randabschnitt des Aufsatzteiles 21 erstreckt und dem oberen Randabschnitt 2e des oberen Gehäuseteils 2o zugewandt ist.

Alternativ zu der in Fig. 8 gezeigten Aneinanderreihung der verschiedenen Spielgeräte 1 können diese auch gruppenweise jeweils sternförmig um ein jeweiliges Gruppenzentrum herum, beispielsweise eine Säule 24, angeordnet werden wie in Fig. 9 gezeigt ist, wobei ebenfalls die Reflektoren 4 von einem jeweils benachbarten Spielgerät her bestrahlt werden können. Die Reflektoren 4 können in diesem Fall jeweils so angeordnet oder ausgerichtet sein, dass eine Hauptabstrahlrichtung parallel zu einer radialen Richtung aus dem Gruppenzentrum gerichtet ist.

## Patentansprüche

1. Spiel- und/oder Unterhaltungsgerät, insbesondere münz- und/oder geldwertmäßig betätigbarer Glücksspielautomat und/oder Wettgerät, mit einem Gehäuse (2), an dem eine Lichteffektvorrichtung (3) zur Erzeugung von Lichteffekten vorgesehen ist, die zumindest einen an einer Außenseite des Gehäuses (2) angeordneten konkaven Reflektor (4) zum Abstrahlen eines Lichtstrahlbündels (5) aufweist, der von einer außerhalb des Gehäuses (2) angeordneten Lichtquelle (6) anstrahlbar ist, **dadurch gekennzeichnet, dass** der Reflektor (4) mit seinem offenen Einfangquerschnitt (7) einem seitlich rechts oder links neben dem Gehäuse (2) liegenden Nachbarplatz, in dem ein benachbartes Spiel- und/oder Unterhaltungsgerät aufstellbar ist, zugewandt und derart ausgebildet ist, dass der Reflektor (4) Licht von einer Lichtquelle (6) an dem benachbarten Spiel- und/oder Unterhaltungsgerät auf dem Nachbarplatz einfängt und in ein Sichtfeld einer an einer Vorderseite des Spiel- und/oder Unterhaltungsgeräts stehenden Bedienperson abstrahlt.

2. Spiel- und/oder Unterhaltungsgerät nach einem der vorhergehenden Ansprüche, wobei an dem Gehäuse (2) neben dem Reflektor (4) eine Lichtquelle (6) zur Bestrahlung eines Reflektors (4) an einem separaten, benachbarten, auf dem Nachbarplatz positionierten Spiel- und/oder Unterhaltungsgerät vorgesehen ist.

3. Spiel- und/oder Unterhaltungsgerät nach dem vorhergehenden Anspruch, wobei die genannte Lichtquelle (6) von dem Reflektor (4) am Gehäuse (2) des eigenen Spiel- und/oder Unterhaltungsgeräts abgewandt und einem benachbarten Spiel- und/oder Unterhaltungsgerät zugewandt ist und/oder wobei zwischen der genannten Lichtquelle (6) und dem neben der Lichtquelle (6) angeordneten Reflektor (4) Beschattungsmittel (8), vorzugsweise in Form einer Gehäusekante oder -fläche (9), zur Beschattung des Reflektors (4) gegen Licht aus der neben dem Reflektor (4) angeordneten Lichtquelle (6) vorgesehen sind.

4. Spiel- und/oder Unterhaltungsgerät nach einem der vorhergehenden Ansprüche, wobei der Reflektor (4) in Form einer länglichen, konkaven Reflektorrinne, ausgebildet ist.

5. Spiel- und/oder Unterhaltungsgerät nach einem der vorhergehenden Ansprüche, wobei der Reflektor (4) einen integral zu der Wandung des Gehäuses (2) gehörenden und/oder die umliegende Wandungskontur stetig fortsetzenden Wandungsabschnitt des Gehäuses (2) bildet.

6. Spiel- und/oder Unterhaltungsgerät nach einem der vorhergehenden Ansprüche, wobei der Reflektor (4) von einer in die Gehäuseoberfläche eingearbeiteten Hohlkehle (10) gebildet ist, deren Oberfläche reflektierend, insbesondere verspiegelt, ausgebildet ist.

7. Spiel- und/oder Unterhaltungsgerät nach einem der vorhergehenden Ansprüche, wobei der Reflektor (4) an einer Kante des Gehäuses (2) zwischen zwei zueinander geneigt angeordneten Gehäusepaneelen vorgesehen ist.

8. Spiel- und/oder Unterhaltungsgerät nach einem der vorhergehenden Ansprüche, wobei der Reflektor (4) an einem seitlichen Randabschnitt (2a) des Gehäuses (2) angeordnet ist und eine zu beiden angrenzenden Gehäuseabschnitten geneigte Winkelausrichtung besitzt, so dass ein Einfangquerschnitt (7) einem Nachbarraum neben dem Gehäuse (2) zugewandt und ein Abstrahlquerschnitt (11) des Reflektors (4) einem Spielplatz für eine vor der Vorderseite des Gehäuses (2) stehende Bedienperson zugewandt ist.

9. Spiel- und/oder Unterhaltungsgerät nach einem der vorhergehenden Ansprüche, wobei sich der Reflektor (4) an einem seitlichen Randabschnitt (2a) des Gehäuses (2) mit seiner Längsachse in die Gehäusetiefe gehend und/oder in einem spitzen Winkel zur Gehäusetiefe (12) erstreckt, vorzugsweise etwa parallel zu einer vertikalen Längsmittelebene des Spiel- und/oder Unterhaltungsgeräts schräg von einer Gerätevorderseite her nach hinten zu einer Geräterückseite hin ansteigend erstreckt.

10. Spiel- und/oder Unterhaltungsgerät nach einem der vorhergehenden Ansprüche, wobei der oder ein weiterer Reflektor an einem liegenden Rand- und/oder Kantenabschnitt (2b) des Gehäuses (2) zwischen zwei Gehäuseabschnitten oder zwischen einer Gehäuseoberseite und einem oberen Geräteaufsatzteil vorgesehen ist, vorzugsweise sich mit seiner Längsachse quer über die Gerätefrontseite entlang des frontseitigen Rand- und/oder Kantenabschnitts (2) erstreckt und einem Bedienplatz vor einer Vorderseite des Gehäuses (2) zugewandt ist.

11. Spiel- und/oder Unterhaltungsgerät nach einem der vorhergehenden Ansprüche, wobei der oder ein weiterer Reflektor an einem aufrechten Rand- und/oder Kantenabschnitt (2b) des Gehäuses (2) zwischen zwei Gehäuseabschnitten vorgesehen ist, vorzugsweise sich mit seiner Längsachse vertikal entlang des frontseitigen Rand- und/oder Kantenabschnitts (2) erstreckt und einem Bedienplatz vor einer Vorderseite des Gehäuses (2) zugewandt ist.

12. Spiel- und/oder Unterhaltungsgerät nach einem der vorhergehenden Ansprüche, wobei die Lichtquelle (6) an einer Gehäuseseite angeordnet ist, die außerhalb des Blickfelds einer vor der Vorderseite des Geräts stehenden Bedienperson angeordnet ist.

13. Spiel- und/oder Unterhaltungsgerätegruppe umfassend zumindest ein erstes Spiel- und/oder Unterhaltungsgerät gemäß einem der vorhergehenden Ansprüche sowie ein weiteres Spiel- und/oder Unterhaltungsgerät, vorzugsweise ebenfalls nach einem der vorhergehenden Ansprüche, wobei an dem zweiten Spiel- und/oder Unterhaltungsgerät die Lichtquelle (6) zur Bestrahlung des Reflektors (4) an dem ersten Spiel- und/oder Unterhaltungsgerät vorgesehen ist.

14. Spiel- und/oder Unterhaltungsgerätegruppe nach dem vorhergehenden Anspruch, wobei sowohl an dem ersten als auch an dem zweiten Spiel- und/oder Unterhaltungsgerät jeweils zumindest ein Reflektor (4) sowie zumindest eine Lichtquelle (6) zur Bestrahlung des Reflektors am jeweils anderen Spiel- und/oder Unterhaltungsgerät vorgesehen sind.

15. Spiel- und/oder Unterhaltungsgerätegruppe nach einem der beiden vorhergehenden Ansprüche, wobei die Spiel- und/oder Unterhaltungsgeräte entlang einer Reihe nebeneinander angeordnet sind und der Reflektor (4) an dem ersten Spielgerät von der Lichtquelle (6) an dem benachbarten Spiel- und/oder Unterhaltungsgerät bestrahlbar ist.

16. Spiel- und/oder Unterhaltungsgerätegruppe nach einem der beiden vorhergehenden Ansprüche, wobei die Spiel- und/oder Unterhaltungsgeräte sternförmig um ein Gruppenzentrum herum angeordnet sind und der Reflektor (4) an dem ersten Spiel- und/oder Unterhaltungsgerät von einer Lichtquelle (6) an dem weiteren benachbarten Spiel- und/oder Unterhaltungsgerät bestrahlbar ist.

## Claims

1. A gaming and/or entertainment device, in particular a slot machine and/or gambling machine operable by coins and/or by monetary equivalents, comprising a housing (2) at which a light effect apparatus (3) for generating light effects is provided which has at least one concave reflector (4) arranged at an outer side of the housing (2) for radiating a light beam (5) which can be irradiated from a light source (6) arranged outside the housing (2), **characterized in that** the open capture cross-section (7) of the reflector (4) faces an adjacent place which is disposed laterally to the right or the left next to the housing (2), in which an adjacent gaming and/or entertainment device can be set up and which is configured such that the reflector (4) captures light from a light source (6) at the adjacent gaming and/or entertainment device at the adjacent place and irradiates it into a field of vision of an operator standing at a front side of the gaming and/or entertainment device.

2. A gaming and/or entertainment device in accordance with one of the preceding claims, wherein a light source (6) for irradiating a reflector (4) at a separate, adjacent gaming and/or entertainment device positioned at the adjacent place is provided at the housing (2) beside the reflector (4).

3. A gaming and/or entertainment device in accordance with the preceding claim, wherein the named light source (6) faces away from the reflector (4) at the housing (2) of its own gaming and/or entertainment device and faces an adjacent gaming and/or entertainment device; and/or wherein shading means (8), preferably in the form of a housing edge or housing surface (9), are provided between the named light source (6) and the reflector (4) arranged next to the light source (6) for shading the reflector (4) from light from the light source (6) arranged next to the reflector (4).

4. A gaming and/or entertainment device in accordance with one of the preceding claims, wherein the reflector (4) is configured in the form of an elongate, concave reflector groove.

5. A gaming and/or entertainment device in accordance with one of the preceding claims, wherein the reflector (4) forms a wall section of the housing (2) which integrally belongs to the wall of the housing (2) and/or which continuously continues the surrounding wall contour.

6. A gaming and/or entertainment device in accordance with one of the preceding claims, wherein the reflector (4) is formed by a channel (10) which is worked into the housing surface and whose surface is formed as reflective, in particular as mirrored.

7. A gaming and/or entertainment device in accordance with one of the preceding claims, wherein the reflector (4) is provided at an edge of the housing (2) between two housing panels arranged inclined toward one another.

8. A gaming and/or entertainment device in accordance with one of the preceding claims, wherein the reflector (4) is arranged at a lateral marginal section (2a) of the housing (2) and has an angular orientation inclined with respect to both adjacent housing sections such that a capture cross-section (7) faces an adjacent space next to the housing (2) and an irradiation cross-section (11) of the reflector (4) faces a playing position for an operator standing in front of the front side of the housing (2).

9. A gaming and/or entertainment device in accordance with one of the preceding claims, wherein the longitudinal axis of the reflector (4) extends at a lateral marginal section (2a) of the housing (2) projecting into the housing depth and/or extends at an acute angle to the housing depth (12), preferably extends approximately in parallel with a vertical longitudinal central plane of the gaming and/or entertainment device sloping upward obliquely from a front device side backward toward a rear side of the device.

10. A gaming and/or entertainment device in accordance with one of the preceding claims, wherein the reflector or a further reflector is provided at a horizontal marginal and/or edge section (2b) of the housing (2) between two housing sections or between an upper housing side and an upper device attachment part, wherein its longitudinal axis preferably extends transversely over the front device side along the front-side marginal and/or edge section (2) and faces an operating space in front of a front side of the housing (2).

11. A gaming and/or entertainment device in accordance with one of the preceding claims, wherein the reflector or a further reflector is provided at an upright marginal and/or edge section (2b) of the housing (2) between two housing sections, wherein its longitudinal axis preferably extends vertically along the front-side marginal and/or edge section (2) and faces an operating space in front of a front side of the housing (2).

12. A gaming and/or entertainment device in accordance with one of the preceding claims, wherein the light source (6) is arranged at a housing side which is arranged outside the field of view of an operator standing in front of the front side of the device.

13. A gaming and/or entertainment device group comprising at least one first gaming and/or entertainment device in accordance with one of the preceding claims and a further gaming and/or entertainment device, preferably likewise in accordance with one of the preceding claims, wherein the light source (6) for irradiating the reflector (4) at the first gaming and/or entertainment device is provided at the second gaming and/or entertainment device.

14. A gaming and/or entertainment device group in accordance with the preceding claim, wherein a respective one reflector (4) as well as at least one light source (6) for irradiating the reflector at the respective other gaming and/or entertainment device are provided both at the first gaming and/or entertainment device and at the second gaming and/or entertainment device.

15. A gaming and/or entertainment device group in accordance with one of the two preceding claims, wherein the gaming and/or entertainment devices are arranged next to one another along a row and the reflector (4) at the first gaming device can be irradiated by the light source (6) at the adjacent gaming and/or entertainment device.

16. A gaming and/or entertainment device group in accordance with one of the two preceding claims, wherein the gaming and/or entertainment devices are arranged in star shape around a group center and the reflector (4) at the first gaming and/or entertainment device can be irradiated by a light source (6) at the further adjacent gaming and/or entertainment device.

## Revendications

1. Appareil de jeu et/ou de divertissement, en particulier machine à sous et/ou appareil de pari pouvant être actionné(e) par pièce de monnaie et/ou par un autre moyen à valeur monétaire, comprenant un boîtier (2), sur lequel un dispositif d'effets lumineux (3) est prévu pour générer des effets lumineux, lequel dispositif d'effets lumineux comporte au moins un réflecteur (4) concave disposé sur une face extérieure du boîtier (2) pour renvoyer un faisceau lumineux (5), lequel réflecteur peut être illuminé par une source lumineuse (6) disposée hors du boîtier (2), **caractérisé en ce que** le réflecteur (4) est tourné avec sa section efficace de capture (7) ouverte vers un emplacement voisin situé latéralement à droite ou à gauche à côté du boîtier (2), sur lequel un appareil de jeu et/ou de divertissement voisin peut être installé, et il est conçu de manière à capturer de la lumière d'une source lumineuse (6) sur l'appareil de jeu et/ou de divertissement voisin à l'emplacement voisin et la renvoyer dans un champ visuel d'un utilisateur se tenant au niveau d'une face avant de l'appareil de jeu et/ou de divertissement.

2. Appareil de jeu et/ou de divertissement selon l'une des revendications précédentes, dans lequel une source lumineuse (6) est prévue sur le boîtier (2) à côté du réflecteur (4) pour illuminer un réflecteur (4) sur un appareil de jeu et/ou de divertissement séparé voisin positionné sur un emplacement voisin.

3. Appareil de jeu et/ou de divertissement selon la revendication précédente, dans lequel ladite source lumineuse (6) est tournée du côté opposé au réflecteur (4) sur le boîtier (2) du propre appareil de jeu et/ou de divertissement et est tournée vers un appareil de jeu et/ou de divertissement voisin et/ou dans lequel des moyens d'ombrage (8), de préférence sous la forme d'une arête ou surface de boîtier (9) sont prévus entre ladite source lumineuse (6) et le réflecteur (4) disposé à côté de la source lumineuse (6) pour créer une ombre sur le réflecteur (4) le protégeant de la lumière de la source lumineuse (6) disposée à côté du réflecteur (4).

4. Appareil de jeu et/ou de divertissement selon l'une des revendications précédentes, dans lequel le réflecteur (4) est réalisé sous la forme d'une rainure réflectrice concave allongée.

5. Appareil de jeu et/ou de divertissement selon l'une des revendications précédentes, dans lequel le réflecteur (4) forme une partie de paroi du boîtier (2) faisant partie intégrante de la paroi du boîtier (2) et/ou prolongeant de manière continue le contour périphérique de la paroi.

6. Appareil de jeu et/ou de divertissement selon l'une des revendications précédentes, dans lequel le réflecteur (4) est formé par une gorge creuse (10) ménagée dans la surface du boîtier et dont la surface est conçue réflectrice, en particulier réfléchissante.

7. Appareil de jeu et/ou de divertissement selon l'une des revendications précédentes, dans lequel le réflecteur (4) est prévu sur une arête du boîtier (2) entre deux panneaux de boîtier disposés inclinés l'un vers l'autre.

8. Appareil de jeu et/ou de divertissement selon l'une des revendications précédentes, dans lequel le réflecteur (4) est disposé sur une partie de bord latérale (2a) du boîtier (2) et possède une orientation angulaire inclinée vers les deux parties de boîtier adjacentes, de telle manière qu'une section efficace de capture (7) est tournée vers un espace voisin à côté du boîtier (2) et qu'une section réfléchissante (11) du réflecteur (4) est tournée vers un emplacement de jeu pour un utilisateur se trouvant devant la face avant du boîtier (2).

9. Appareil de jeu et/ou de divertissement selon l'une des revendications précédentes, dans lequel le réflecteur (4) s'étend sur une partie de bord latérale (2a) du boîtier (2) avec son axe longitudinal en direction de la profondeur du boîtier et/ou selon un angle aigu par rapport à la profondeur du boîtier (12), de préférence approximativement parallèlement à un plan médian longitudinal vertical de l'appareil de jeu et/ou de divertissement de manière oblique ascendante d'une face avant de l'appareil vers l'arrière en direction d'une face arrière de l'appareil.

10. Appareil de jeu et/ou de divertissement selon l'une des revendications précédentes, dans lequel le réflecteur ou un autre réflecteur est prévu sur une partie de bord et/ou d'arête (2b) horizontale du boîtier (2) entre deux parties de boîtier ou entre une face supérieure de boîtier et un élément supérieur monté sur le dessus de l'appareil, s'étend de préférence avec son axe longitudinal transversalement sur la face avant de l'appareil le long de la partie de bord et/ou d'arête (2) côté avant et est tourné vers une position de l'utilisateur devant une face avant du boîtier (2).

11. Appareil de jeu et/ou de divertissement selon l'une des revendications précédentes, dans lequel le réflecteur ou un autre réflecteur est prévu sur une partie de bord et/ou d'arête (2b) verticale du boîtier (2) entre deux parties de boîtier, s'étend de préférence avec son axe longitudinal verticalement le long de la partie de bord et/ou d'arête (2) côté avant et est tourné vers une position de l'utilisateur devant une face avant du boîtier (2).

12. Appareil de jeu et/ou de divertissement selon l'une des revendications précédentes, dans lequel la source lumineuse (6) est disposée sur un côté du boîtier qui est disposé hors du champ visuel d'un utilisateur se trouvant devant la face avant de l'appareil.

13. Groupe d'appareils de jeu et/ou de divertissement comprenant au moins un premier appareil de jeu et/ou de divertissement selon l'une des revendications précédentes, ainsi qu'un autre appareil de jeu et/ou de divertissement, de préférence également selon l'une des revendications précédentes, la source lumineuse (6) sur le deuxième appareil de jeu et/ou de divertissement étant prévue pour illuminer le réflecteur (4) sur le premier appareil de jeu et/ou de divertissement.

14. Groupe d'appareils de jeu et/ou de divertissement selon la revendication précédente, dans lequel au moins un réflecteur (4) ainsi qu'au moins une source lumineuse (6) sont prévus respectivement aussi bien sur le premier appareil de jeu et/ou de divertissement que sur le deuxième pour illuminer le réflecteur sur l'autre appareil de jeu et/ou de divertissement respectif.

15. Groupe d'appareils de jeu et/ou de divertissement selon l'une des deux revendications précédentes, dans lequel les appareils de jeu et/ou de divertissement sont disposés les uns à côté des autres en une rangée et le réflecteur (4) sur le premier appareil de jeu peut être illuminé par la source lumineuse (6) sur l'appareil de jeu et/ou de divertissement voisin.

16. Groupe d'appareils de jeu et/ou de divertissement selon l'une des deux revendications précédentes, dans lequel les appareils de jeu et/ou de divertissement sont disposés en forme d'étoile autour d'un centre du groupe et le réflecteur (4) sur le premier appareil de jeu et/ou de divertissement peut être illuminé par une source lumineuse (6) sur l'autre appareil de jeu et/ou de divertissement voisin.
